# EUROPÄISCHE PATENTSCHRIFT

(11) **EP 0 853 572 B1**
(45) Veröffentlichungstag und Bekanntmachung des Hinweises auf die Patenterteilung: **06.12.2000**
(21) Anmeldenummer: 96931786.6
(22) Anmeldetag: 11.09.1996
(51) Int. Cl.: B60T 13/74

(54) **SYSTEM ZUM STEUERN ODER REGELN EINER ELEKTROMECHANISCHEN BREMSE**
SYSTEM FOR CONTROLLING OR ADJUSTING AN ELECTROMECHANICAL BRAKE
SYSTEME DE COMMANDE OU DE REGLAGE D'UN FREIN ELECTROMECANIQUE

(30) Priorität: 30.09.1995 DE 19536695
(43) Veröffentlichungstag der Anmeldung: 22.07.1998
(73) Patentinhaber: Continental Teves AG & Co. oHG, 60488 Frankfurt (DE)
(72) Erfinder: BÖHM, Jürgen, D-65558 Oberneisen (DE); SEMSCH, Martin, D-64291 Darmstadt (DE); BALZ, Jürgen, D-65510 Hünstetten (DE); BILL, Karlheinz, D-63303 Dreieich (DE); SCHEERER, Peter, D-64331 Weiterstadt (DE)
(86) Internationale Anmeldenummer: EP9603978
(87) Internationale Veröffentlichungsnummer: WO9712794

(56) Entgegenhaltungen:
- EP-A- 0 166 670
- EP-A- 0 170 478
- WO-A-89/03490
- DE-A- 4 021 572
- US-A- 4 995 483

## Beschreibung

Die Erfindung bezieht sich auf ein System zum Steuern oder Regeln einer elektromechanischen Bremse gemäß dem Oberbegriff des Anspruchs 1.

Eine elektromotorische Bremse mit diesen Merkmalen ist in der US PS 4,995,483 beschrieben. Es handelt sich um ein System zum Abbremsen von Flugzeugen, dessen prinzipielle Struktur aber auch für Straßenkraftfahrzeuge einsetzbar ist. Die Bremse besteht aus einem Satz Bremsscheiben sowie einen dazugehörigen Satz Reibscheiben, die mittels einer Zuspannvorrichtung gegeneinander gedrückt werden. Die Zuspannvorrichtung wird elektromotorisch betätigt, wobei eine Spindel, die über ein Rollengewindegetriebe von einem Elektromotor angetrieben wird, gegen die äußere Reibscheibe gedrückt wird. Zwischen der ersten Reibscheibe und dem Spindelkopf ist ein Kraftmeßelement angeordnet. Zwischen den Bremsscheiben und den Reibscheiben ist ein Lüftspiel vorgesehen.

Allgemein gilt: Um eine Bremskraft zu erzeugen, muß zunächst das Lüftspiel überwunden werden. Erst wenn die Reibscheiben bzw. Reibelemente an den Bremsscheiben anliegen, kann eine Zuspannkraft übertragen werden, die zur Abbremsung des mit den Bremsscheiben verbundenen Rades führt. Zum Anlegen der Reibscheiben an die Bremsscheiben, d.h. zur Überwindung des Lüftspiels werden nur geringe Kräfte übertragen, die einen bestimmten Grenzwert nicht überschreiten sollten.

Wenn dieser Grenzwert überschritten wird, so wird dies gemäß der US-PS dahingehend interpretiert, daß die Reibscheiben an den Bremsscheiben anliegen.

Die dazu gehörige Winkelposition des antreibenden Elektromotors wird als Nullposition definiert.

Um eine Zuspannkraft zu erzeugen, kann der Motor um bestimmte Winkelbeträge weiter verstellt werden, wobei der Zusammenhang zwischen der Verstellung des Motors ausgehend von der Nullposition und der ausgeübten Spannkraft berücksichtigt wird.

Beim Lösen der Bremse, wird die Spindel zunächst zurückgefahren, bis die Nullposition erreicht ist, sodann wird sie um ein weiteres Stück, das dem Lüftspiel entspricht, zurückgestellt. Diese Art der Lüftspieleinstellung ist sehr ungenau, sie kann darüberhinaus nur im Rahmen einer Bremsbetätigung erfolgen. Es ist nicht möglich das Lüftspiel unabhängig von einer Bremsung einzustellen.

Bei der Bremse gemäß der genannten US-PS ist es zwingend notwendig, einen Kraftsensor vorzusehen, um die Nullposition bestimmen zu können. Dabei tritt das Problem auf, daß das Signal solcher Kraftsensoren einem Drift unterliegt, so daß es nur unter Einsatz erheblicher elektronischer Mittel möglich ist, die tatsächliche Kraftausübung zu bestimmen. Die Entwicklungstendenz geht daher dahin, auf einen derartigen Sensor zu verzichten und die notwendigen Informationen für eine Bremsbetätigung aus den Signalen anderer Sensoren, z. B. eines Sensors, der die Raddrehgeschwindigkeit ermittelt, abzuleiten. Damit entfällt aber die Möglichkeit, die in der US-PS genannten Methode zur Nullpositionsbestimmung durchzuführen.

Die Erfindung beruht daher auf der Aufgabe, ein Steuer- bzw. Regelsystem zu schaffen, das in der Lage ist, auch ohne Einsatz eines Kraftsensors ein Lüftspiel einzustellen.

Die Erfindung beruht weiterhin auf der Aufgabe ein Steuer-bzw. Regelsystem zur Erkennung und Nachstellung des Lüftspiels zu schaffen, das unabhängig von einer Bremsbetätigung arbeitet und darüberhinaus auch während der Fahrt des Kraftfahrzeuges ein Nachstellen des Lüftspiels ermöglicht.

Dieses Problem wird gelöst mit einem System zum Steuern und Regeln einer elektromotorisch betätigbaren Bremse gemäß dem Hauptanspruch.

Um sowohl das Lüftspiel einstellen zu können, als auch die Bremse definiert betätigen zu können, ist es notwendig, festzustellen, in welcher Winkelposition, das heißt Nullposition, des Motors ein Anlegen der Reibelemente an die Reibfläche erfolgt, um die Nullposition definieren zu können.

Das Anlegen des Reibelements an die Reibfläche wird während einer sogenannten Detektionsbewegung mit Hilfe einer Detektionseinrichtung festgestellt. Ergibt die Detektionseinrichtung ein Kontaktsignal, so kann die dazugehörige Winkelposition des antreibenden Elektromotors als Nullposition definiert werden. Der Reibbelag wird anschließend lagegeregelt in eine Position, bei der ein vorab definiertes Lüftspiel Δφ eingehalten wird, zurückgefahren.

Lagegeregelt bedeutet, daß der Elektromotor so angesteuert wird, daß er sich mit einer Winkelgeschwindigkeit dreht, die durch einen Regler vorgegeben wird. Der Regler berechnet einen Winkelgeschwindigkeits-Sollwert aus der Differenz zwischen dem angestrebten Motorwinkel-Sollwert und dem vorliegenden Motorwinkel-Istwert. Auf diese Art und Weise läßt sich das Soll-Lüftspiel rasch und feinfühlig einstellen.

Eine Möglichkeit zur Feststellung, ob die Reibbeläge an der Bremsscheibe anliegen, besteht darin, den Elektromotor mit einem näherungsweisen konstanten Motormoment anzusteuern. Dazu wird der Motor mit einem konstanten Motorstrom-Sollwert angesteuert, was bei Motoren, die üblicherweise für derartige Betätigungseinrichtungen eingesetzt werden, zu einem näherungsweise konstanten Motormoment führt.

In diesem Modus ist zu erwarten, daß sich der Motor, solange sich das Reibelement noch im Lüftspiel befindet, also von der Reibscheibe beabstandet ist, mit wachsender Winkelgeschwindigkeit dreht. Das Anlegen der Reibelemente an die Reibfläche der Bremsscheibe kann nun wie folgt festgestellt werden. Während der Überwindung des Lüftspieles wird die Winkelgeschwindigkeit und die Winkelbeschleunigung der Motorwelle beobachtet. Dazu werden die Signale eines Resolvers herangezogen,dessen Signale auch dazu dienen, eine elektronische Kommutierung des Motors durchzuführen.

Das Motormoment wird dabei so eingestellt, daß es nur wenig größer ist als das Reibungsmoment des Motors einschließlich der angekoppelten Mechanik. Das verbleibende effektive Moment führt zu einer geringen Beschleunigung der Motorwelle und einer beschleunigten Zubewegung der Reibbeläge bzw - elemente in Richtung auf die Bremsscheibe. Dies führt dazu, daß nach dem Zurücklegen eines vorher nicht bekannten Weges die Reibbeläge mit geringer Kraft an die Reibfläche der Bremsscheiben angelegt werden. Das daraus resultierende Belastungs-Moment für den Motor bewirkt zunächst eine sich verringernde Motorbeschleunigung und anschließend eine Verzögerung (negative Beschleunigung) der Motorwinkelgeschwindigkeit bis zum Stillstand. Da das für diese Detektionsbewegung vorgegebene Motormoment ein nur geringes Motorbeschleunigungsmoment erzeugt, bewirkt bereits das Anlegen der Reibbeläge an die Reibscheibe eine nahezu unmittelbar einsetzende Vorzeichenumkehr der Motorbeschleunigung.

Der Null-Durchgang der Motorbeschleunigung dient als Kontaktsignal für das Anlegen der Reibbeläge an die Reibfläche. Der Motorwinkel zum Zeitpunkt des Null-Durchgangs ergibt damit die Nullposition des Motors.

Da das effektive Motormoment nur sehr klein ist, erzeugt das Anlegen der Reibbeläge an die Reibfläche keine nennenswerte Verzögerung des Rades. Die Grundüberlegung besteht somit darin, den Reibbelag mit geringer Kraft gegen die Reibfläche zu fahren, so daß beim Anlegen des Reibelements an die Reibfläche keine erheblichen Kräfte übertragen werden, die eine Verzögerung des Fahrzeuges bewirken würden. Die erwähnte Methode zur Bestimmung des Rotordrehwinkels, bei dem die erste Reibfläche an der zweiten Reibfläche anliegt, hat den Vorteil, daß das Signal eines an sich schon vorhandenen Drehwinkelmeßsystems, das zum elektronischen Kommutieren des Motors benötigt wird, genutzt werden kann.

Ergibt die Detektionseinrichtung somit ein Kontaktsignal, so wird der Reibbelag lagegeregelt in eine Position, bei der ein vorab definiertes Lüftspiel eingehalten wird, zurückgefahren. Bei der Rückwärtsbewegung, also dann, wenn das eigentliche Lüftspiel eingestellt wird, wird der Motor so geregelt, daß er sich mit einer Winkelgeschwindigkeit dreht, die durch einen Regler vorgegeben wird. Der Regler berechnet einen Winkelgeschwindigkeitsollwert aus der Differenz zwischen dem angestrebten Motorsollwinkel und dem Motoristwinkel. Auf diese Art und Weise läßt sich das Sollüftspiel rasch und feinfühlig einstellen.

Im folgenden soll anhand zweier Figuren der Erfindungsgedanke näher erläutert werden.

Es zeigen:
- Figur 1: den typischen Aufbau einer elektromotorisch betätigten Radbremse, und
- Figur 2: einen Blockschaltbild zur Motoransteuerung.

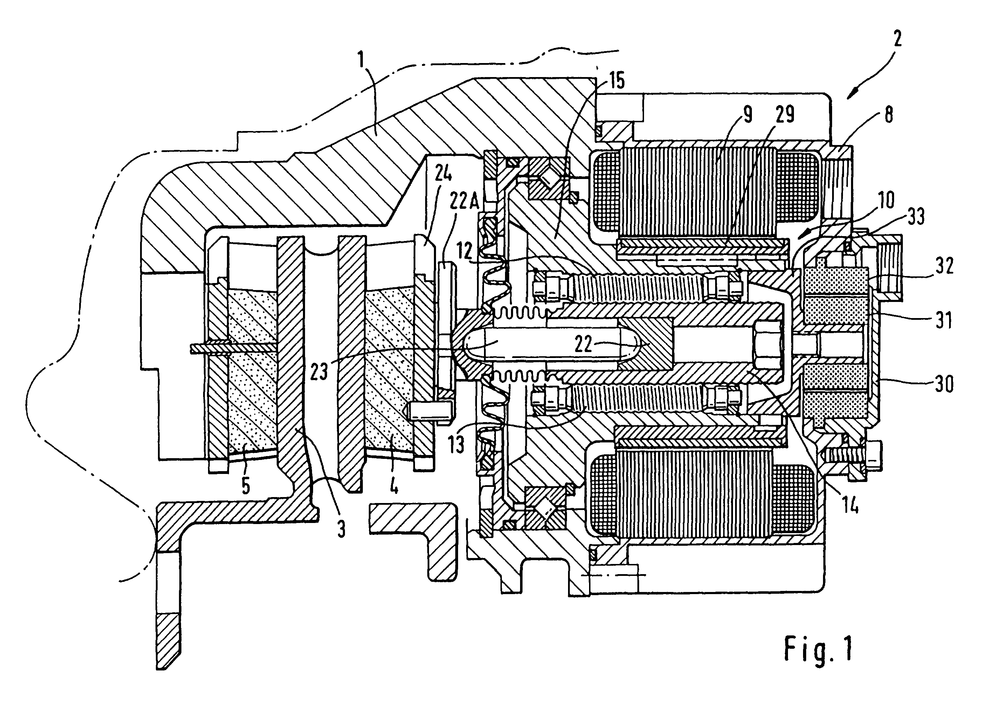

Die Figur 1 zeigt eine elektromechanisch betätigbare Schwimmsattel-Scheibenbremse. Die weiter unten beschriebene Ansteuerung dieser Bremse läßt sich natürlich auch auf alle anderen Arten von Scheiben- sowie auf Trommelbremsen übertragen.

Die Schwimmsattel-Scheibenbremse besteht aus einem gegenüber der Bremsscheibe 3 verschiebbar gelagerten Bremssattel 1, sowie einem Elektromotor 2, dessen Gehäuse 8 am Bremssattel 1 befestigt ist. Zu beiden Seiten der Bremsscheibe befindet sich je ein Reibbelag 4,5. Der erste Reibbelag 4 ist an einer vom Elektromotor 2 angetriebenen Spindel 14 abgestützt, so daß er vom Elektromotor 2 gegen die Bremsscheibe 3 gedrückt werden kann. Der zweite Bremsbelag 5 ist am Bremssattel 1 befestigt, und wird von den Reaktionskräften, die beim Anlegen der ersten Scheibe 4 gegen die Bremsscheibe 3 auf den Sattel 1 übertragen werden, gegen die andere Seite der Bremsscheibe gedrückt.

Der Elektromotor 2 ist ein permanent erregter, elektronisch kommutierbarer Motor, dessen Stator 9 fest im Gehäuse 8 liegt. Der Stator 9 ist dabei in bekannter Weise durch ein Spulensystem realisiert. Der Rotor 10 besteht aus einer Hohlwelle 15, die drehbar im Bremssattel gelagert ist. An der Außenseite der Hohlwelle sind mehrere Permanentmagnetsegmente 29 angeordnet, die fest mit der Hohlwelle 15 verbunden sind. Das vom Stator 9 erzeugte Magnetfeld wirkt mit dem permanenten Magnetfeld der Magnetsegmente 29 zusammen und erzeugt eine Drehung der Hohlwelle 15. Diese Drehung wird mittels eines Rollengewindegetriebes in einer Axialbewegung der Spindel 14 übertragen. Dazu ist an der Innenseite der Hohlwelle 15 sowie an der Außenseite der Spindel 14 jeweils ein Gewinde vorgesehen, die jeweils in das Gewinde von achsparallelen Gewinderollen 12,13 eingreifen.

Die Spindel 14 ist als Hohlzylinder mit einem inneren Absatz 20 ausgeführt. An diesem Absatz 20 stützt sich eine Kalotte 22 ab, an der eine Druckstange 23 anliegt. Dieser wiederum stützt sich mit ihrem anderen Ende an eine weitere Kalotte 22A ab, die verdrehsicher mit dem Belagträger 24 des ersten Reibbelags 4 verbunden ist.

Der Motor 2 ist weiterhin mit einem sogenannten Resolver 30 versehen. Dieser besteht aus zwei koaxial zueinander durch einen Luftspalt voneinander getrennten Ringen 31, 32, wobei der radial innen liegende Ring 31 über ein Halteelement 33 mit der Hohlwelle 15 verbunden ist. Der radial äußere Ring 32 ist mit dem Gehäuse 8 verbunden. Die Signale des Resolvers dienen einerseits dazu, den Motor zu kommutieren, also die Bestromung des Stators 9 so durchführen zu können, daß ein magnetisches Wanderfeld entsteht, und andererseits dazu, die relative Winkellage des Rotors festzustellen. Da die Winkellage des Rotors mit der Axiallage der Spindel direkt verknüpft ist, liefert das Signal des Resolvers auch eine Aussage über die Lage der Spindel 14 im Bremssattel 1.

Eine Betätigung der eben beschriebenen Bremse erfolgt durch eine Bestromung des Elektromotors 2.

Dabei muß die Bremse die folgenden Funktionen erfüllen.
1. Bremsen spannen.
   Dies bedeutet, daß die Reibbeläge 4,5 mit einer bestimmten Kraft, der Zuspannkraft, auf die Bremsscheibe gedrückt werden, so daß die auftretenden Reibkräfte ein Bremsmoment erzeugen, das zu einer Verzögerung des mit der Bremsscheibe 3 verbundenen Fahrzeugrades führt.Beim Spannen der Bremse wird aus der Differenz zwischen einem Verzögerungssoll- und einem Verzögerungsistsignal eine Sollwinkelgeschwindigkeit eingestellt, so daß der Motor mit einem Strom der Stärke beaufschlagt wird, bei der sich die gewünschte Winkelgeschwindigkeit einstellt.
2. Bremse lösen.
   Dies bedeutet, daß die Zuspannkraft gesenkt wird und damit an die vom Fahrer gewünschte Fahrzeugverzögerung angepaßt wird.
3. Lüftspiel einstellen.
   Dies bedeutet, daß der Elektromotor nach einer Bremsung so angesteuert werden muß, daß die Bremsbeläge 3,4 einen Abstand zur Bremsscheibe einhalten. Dieser Abstand wird als Lüftspiel bezeichnet. Die Einhaltung eines derartigen Lüftspiels soll verhindern, daß die Reibbeläge an der Bremsscheibe reiben, ohne daß eine Bremswirkung beabsichtigt ist.

Wie in Fig. 1 angedeutet, weist der zweite Reibbelag 5 einen Kontaktstift auf, die sich durch den Belag hindurch zur Scheibe erstreckt. Ein ähnlicher Kontaktstift ist für den ersten Bremsbelag 4 vorgesehen, der in Fig. 1 aber nicht dargestellt ist. Wenn die Bremsbeläge, wie in Figur 1 dargestellt an der Scheibe anliegen, stellt sich ein leitender Kontakt zwischen den Spitzen der Kontaktstifte und der Bremsscheibe ein. Dadurch kann, wie weiter unten näher erläutert wird, ein Stromkreis geschlossen werden.

Der Resolver 30 ermöglicht eine relative Winkelmessung für die Winkellage der Rotorhülse 15 und damit der Lage der Spindel 14. Der konstruktive Aufbau der in Figur 1 beschriebenen Mechanik sieht keine direkte meßtechnische Erfassung des Lüftspiels vor. Durch Belagverschleiß und thermische Einflüsse findet aber eine Änderung zwischen der Zuordnung von axialer Lage der Spindel und Bremsspannkraft statt. Ein weiteres Problem besteht darin, daß beim Einschalten der Ansteuerung für die elektromechanisch betätigbare Bremse die aktuelle Lüftspielsituation zunächst vollständig unbekannt ist. Dies erfordert eine Bestimmung der Einstellung des Lüftspiels unmittelbar nach dem Einschalten der Ansteuerung.Ist nämlich das Lüftspiel bekannt, so läßt sich eine Bremsung wesentlich feinfühliger durchführen, da der Übergang zu eigentlichen Abbremsung an der richtigen Winkelposition erfolgen kann. Die Kenntnis der genauen Größe des Lüftspiels ist insbesondere dann notwendig, wenn die auszuübende Bremskraft nicht geregelt sondern gesteuert werden muß.

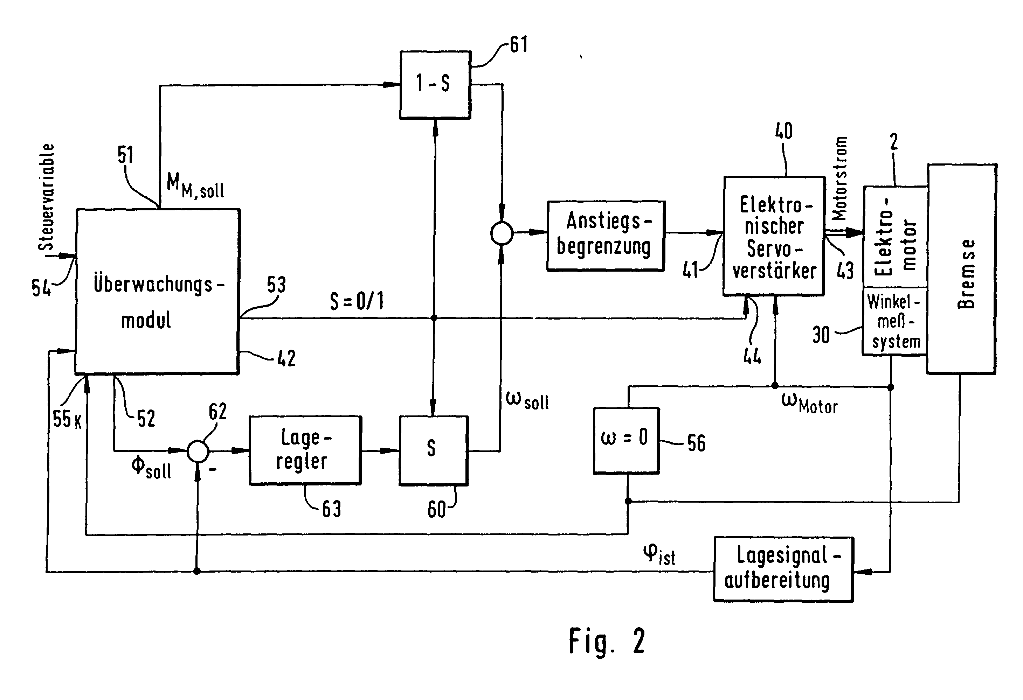

zur Feststellung der aktuellen Lüftspielsituation und zum Einstellen des Lüftspiels ist die Ansteuerung des Elektromotors und der dazugehörigen Bremse in Figur 2 dargestellt. Die Strombeaufschlagung des Elektromotors 2 erfolgt mit einem sogenannten elektronischen Servoverstärker 40. Der Eingang 41 dieses Servoverstärkers ist über zwei Pfade mit einem Überwachungsmodul 44 verbunden. Der Servoverstärker kann in zwei Betriebsarten arbeiten. Am Eingang 41 wird als Eingangsgröße die Sollwinkelge-schwindigkeit des Motors eingegeben. Am Ausgang 43 liefert eine interne Leistungsendstufe den Motorstrom für den Elektromotor. Der Motorstrom kann nun so eingeregelt werden, daß die vorgegebene Winkelgeschwindigkeit bzw. der vorgegebenen Winkelgeschwindigkeitsverlauf am Eingang 41 eingehalten wird. Dazu ist im Servoverstärker eine interne Rückkopplung des Resolversignals 30 vorgesehen. Der Servoverstärker arbeitet dann in der Betriebsart "Motordrehzahlregelung". Am Steuereingang 44 wird dazu ein Signal S=1 angelegt.

Der Servoverstärker kann aber auch in die Betriebsart "Motormomentenregelung" betrieben werden. Dazu wird intern die Rückkopplung im Servoverstärker ausgeschaltet, so daß die Stärke des am Ausgang 43 anstehenden Motorstroms lediglich abhängt von der Größe am Eingang 41. Dieser Modus wird erreicht, wenn am Steuereingang 44 der Wert S=0 anliegt. Am Eingang 41 wird in diesem Betriebsmodus als Eingangsgröße der Sollwert für das Motormoment angegeben.

Das Überwachungsmodul 42 liefert an einem ersten Ausgang ein Sollmotormomentensignal M_{M,Soll} 51 und an einem zweiten Ausgang ein Sollwinkelsignal φₛₒₗₗ 52.

An einem dritten Ausgang 53, wird das Steuersignal S zu 0 oder 1 gesetzt.

Am Eingang 55 wird das Kontaktsignal angelegt.

Die Aktivierung des Steuer- und Regelsystems zur Erfassung der aktuellen Lüftspielsituation und Einstellung des Lüftspiels erfolgt durch eine Steuervariable am Eingang 54, die von einer nicht dargestellten übergeordneten Funktionseinheit bei Bedarf gesetzt wird, z.B. dann, wenn das Lüftspiel erfaßt und neu eingestellt werden soll.

Um ein neues, angepaßtes Lüftspiel einstellen zu können, muß zunächst eine neue Nullposition ermittelt werden. Dazu ist es notwendig, ein Kontaktsignal zu generieren, so daß die Winkelstellung des Motors zum Zeitpunkt der Erzeugung des Signals als neue Nullposition definiert werden kann.

Die Ermittlung einer neuen Nullposition kann auf unterschiedliche Weise realisiert werden.

Eine Möglichkeit wird im folgendem beschrieben.Zunächst wird am Steuerausgang 53 das Signal S=0 gesetzt. Der Servoverstärker arbeitet damit in der Betriebsart "Motormomentenregelung". Bei S=0 ist ein Schalter 60 in Pfad zwischen dem Ausgang 52 des Bewachungsmoduls 42 und dem Servoverstärker 40 unterbrochen. Lediglich das Signal am Ausgang 51 wird über den offenen Schalter 61 zum Eingang 41 des Servoverstärkers geführt. Dieser treibt den Elektromotor 2 derart an, daß der Reibbelag in Richtung auf die Bremsscheibe bewegt wird.

Dabei wird das Sollmoment beginnend bei einem vorher definierten Startwert so lange stufenweise erhöht, bis anhand des Motorgeschwindigkeitssignals eine Bewegung sicher festgestellt wird oder eine definierte Obergrenze für das Sollmoment erreicht ist.

Wenn die obere Grenze erreicht wird, so befindet sich die Bremse offensichtlich in einem gespannten Zustand. In diesem Fall wird S = 1 gesetzt und der Elektromotor um eine Winkeländerung lagegeregelt zurückbewegt. Nach Beendigung der Bewegung wird ein erneuter Versuch zur Ermittlung der Nullposition unternommen.

Findet eine Bewegung des Motors statt, so wird die Lüftspieldetektion nach Überschreiten einer vorgegebenen Mindestwinkeländerung aktiviert. Die Berücksichtigung einer Mindestwinkeländerung verhindert, daß bedingt durch Haft/Gleitreibungseffekte oder durch bereits vorhandene aber geringe Lastmomente nur kurzzeitig eine Bewegung stattfindet, die keine zuverlässige Detektion erlaubt. Nach Aktivierung wird die Winkelbeschleunigung überwacht.

Da der Servoverstärker 40 beim Anlegen der Bremsbeläge in der Betriebsart "Momentenregelungen" arbeitet, d.h. mit konstantem Motormoment angesteuert wird , wird die Winkelgeschwindigkeit des Motors aufgrund des vorgegebenen Beschleunigungsmoment kontinuierlich ansteigen. Sobald das Reibelement an der Bremsscheibe anliegt, steigt die Belastung des Motors rapide an, so daß die Winkelgeschwindigkeit des Motors rasch bis zum Stillstand verlangsamt wird. Die Winkelbeschleunigung durchläuft dabei einen Nullwert. Dieser kann in der Detektionseinrichtung 56 registriert werden, und als Kontaktsignal, d.h. als Hinweis darauf, daß die Bremsbeläge an der Bremsscheibe anliegen, ausgewertet werden. Dieses Kontaktsignal wird an den Eingang 55 des Moduls 42 gelegt.

Da die oben beschriebene Luftspieleinstellungsstrategie einen definierten Testzyklus mit definierten Testbewegungen vorsieht, ist eine sofortige Verschleißnachstellung nach Lösen der Bremse auf der Basis dieses Verfahrens nicht möglich. Soll für die Verschleißnachstellung das oben genannte Verfahren eingesetzt werden, so muß die Nachstellung gesondert vorgenommen werden. Dabei ist zu beachten, daß nicht nach jeder Abbremsung eine gesonderte Verschleißnachstellung zwingend erforderlich ist. Wann eine Verschleißnachstellung notwendig ist, läßt sich aufgrund relevanter und meßtechnisch verfügbarer Signale und deren Auswertung über einen längeren Zeitraum bestimmen.

## Patentansprüche

1. System zum Steuern oder Regeln einer elektromotorischen Bremse, die eine erste Reibfläche aufweist, die an einem Teil ausgebildet ist, das sich mit dem abzubremsenden Teil bewegt, mit einer zweiten Reibfläche, die an einem Reibelement ausgebildet ist, das von einem Elektromotor gegen die erste Reibfläche bewegbar ist, wobei die erste und zweite Reibfläche ein Lüftspiel zueinander einhalten, mit Mitteln, die direkt oder indirekt den Rotordrehwinkel des Elektromotors erfassen, mit einem Kontaktfeststellungsmittel, das in der Lage ist, festzustellen, ob die erste Reibfläche an der zweiten Reibfläche anliegt und daraufhin ein Kontaktsignal generiert, dadurch **gekennzeichnet**, daß zur Bestimmung des Rotordrehwinkels, bei dem die erste Reibfläche an der zweiten Reibfläche anliegt, die Änderung der von den Mitteln zum Erfassen des Rotordrehwinkels abgeleiteten Rotordrehwinkelgeschwindigkeit beim Anlegen der ersten Reibfläche an die zweite Reibfläche ausgewertet wird.

2. System nach Anspruch 1, dadurch **gekennzeichnet**, daß zur Bestimmung des Rotordrehwinkels, bei dem die erste Reibfläche an der zweiten Reibfläche anliegt, der Motor mit einem konstanten Drehmoment derart angesteuert wird, daß die zweite Reibfläche auf die erste Reibfläche zubewegt wird, und daß der Null-Durchgang der Winkelbeschleunigung als Basis für die Generierung eines Kontaktsignals verwandt wird.

3. System nach Anspsruch 1, dadurch **gekennzeichnet**, daß die Ansteuerung des Motors so ausgelegt ist, daß er entweder mit einer definierten Drehzahl oder mit einem definierten Drehmoment betrieben werden kann.

4. System nach Anspruch 3, dadurch **gekennzeichnet**, daß beim Ansprechen der Kontaktfeststellungsmittel der Motor unter Regelung bzw Steuerung der Winkelgeschwindigkeit auf das vorgegebene Lüftspiel zurückgefahren wird.

5. System nach Anspruch 3, daduch **gekennzeichnet**, daß der Elektromotor über einen Servoverstärker angefahren wird, der über ein Schaltelement entweder auf die Betriebsart "Momentenregelung" oder aber auf die Betriebsart "Drehzahlregelung" geschaltet werden kann.

6. System nach Anspruch 5, dadurch **gekennzeichnet**, daß die Steuerung ein Modul enthält, das entsprechende Schaltsignale an den Servoverstärker herausgibt.

## Claims

1. System of controlling or adjusting an electromotive brake which includes a first friction surface on an element which moves along with the element to be braked, a second friction surface provided on a friction element which is movable against the first friction surface by an electric motor, wherein the first and the second friction surface maintain a clearance inbetween each other, means which directly or indirectly sense the angle of rotation of the rotor of the electric motor, a contact-detection means which is able to determine whether the first friction surface bears against the second friction surface and thereupon generates a contact signal,
characterized in that the variation of the rotor angular velocity derived from the means of sensing the angle of rotation of the rotor upon application of the first friction surface on the second friction surface is evaluated to determine the angle of rotation of the rotor where the first friction surface bears against the second friction surface.

2. System as claimed in claim 1,
characterized in that for determining the angle of rotation of the rotor, where the first friction surface abuts on the second friction surface, the motor is driven at a constant torque so that the second friction surface is moved towards the first friction surface, and in that the zero passage of the angular acceleration is used as a basis for the generation of a contact signal.

3. System as claimed in claim 1,
characterized in that the activation of the motor is so that it can be operated either by a defined rotational speed or with a defined torque.

4. System as claimed in claim 3,
characterized in that upon response of the contact-detection means the motor is restored to the predetermined clearance by adjustment or control of the angular velocity.

5. System as claimed in claim 3,
characterized in that the electric motor is driven by a servo booster which can be switched by a switch element either to the 'torque control' mode of operation or the 'rotational speed control' mode of operation.

6. System as claimed in claim 5,
characterized in that the control includes a module which issues corresponding switch signals to the servo booster.

## Revendications

1. Dispositif de commande ou de régulation d'un frein à moteur électrique qui comprend une première surface de friction, qui est réalisée sur une partie qui se déplace avec la partie à freiner, une seconde surface de friction, qui est réalisée sur un élément de friction qui peut être déplacé par un moteur électrique pour venir en appui sur la première surface de friction, la première et la seconde surfaces de friction maintenant un entrefer entre elles, des moyens qui détectent directement ou indirectement l'angle de rotation de rotor du moteur électrique, et des moyens de détermination de contact qui sont en mesure de déterminer si la première surface de friction est en appui sur la seconde surface de friction et produit par suite un signal de contact, caractérisé en ce que, pour déterminer l'angle de rotation de rotor pour lequel la première surface de friction est en appui sur la seconde surface de friction, la variation de la vitesse angulaire de rotation de rotor relevée par les moyens de détection de l'angle de rotation de rotor lors de la venue en appui de la première surface de friction sur la seconde surface de friction est exploitée.

2. Dispositif suivant la revendication 1, caractérisé en ce que, pour déterminer l'angle de rotation de rotor pour lequel la première surface de friction est en appui sur la seconde surface de friction, le moteur est commandé avec un couple constant de manière que la seconde surface de friction soit approchée de la première surface de friction et en ce que le passage par zéro de l'accélération angulaire est utilisé comme base pour la production d'un signal de contact.

3. Dispositif suivant la revendication 1, caractérisé en ce que la commande du moteur est conçue de manière qu'il soit possible de le faire fonctionner soit avec une vitesse de rotation définie, soit avec un couple défini.

4. Dispositif suivant la revendication 3, caractérisé en ce que, lorsque les moyens de détermination de contact réagissent, le moteur est déplacé en sens opposé jusqu'à l'entrefer préfixé moyennant une régulation ou commande de la vitesse angulaire.

5. Dispositif suivant la revendication 3, caractérisé en ce que le moteur électrique est mis en marche au moyen d'un servo-amplificateur qui peut être commuté au moyen d'un élément de commutation soit sur le mode de fonctionnement de "régulation de couple", soit sur le mode de fonctionnement de "régulation de vitesse de rotation".

6. Dispositif suivant la revendication 5, caractérisé en ce que la commande contient un module qui délivre des signaux de commutation appropriés au servo-amplificateur.
